Europäisches Patentamt

European Patent Office

Office européen des brevets

(19)

(11) Numéro de publication : **0 511 068 A1**

(12) ## DEMANDE DE BREVET EUROPEEN

(21) Numéro de dépôt : **92401100.0**

(22) Date de dépôt : **17.04.92**

(51) Int. Cl.$^5$ : **F16D 35/00, F16H 1/455, B60K 17/35**

(30) Priorité : **26.04.91 FR 9105201**

(43) Date de publication de la demande :
**28.10.92 Bulletin 92/44**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Guimbretiere, Pierre**
**103, route de St-Germain**
**F-78640 Neauphle Le Château (FR)**

(74) Mandataire : **Moncheny, Michel et al**
**c/o Cabinet Lavoix 2 Place d'Estienne d'Orves**
**F-75441 Paris Cedex 09 (FR)**

(54) **Dispositif de transmission à différentiel et viscocoupleur, notamment pour véhicule automobile.**

(57)    Ce dispositif comprend un accouplement (68) à fluide visqueux et un embrayage à friction (74) auquel sont intégrés des moyens de commande (80, 81) qui provoquent le serrage ou le desserrage de l'embrayage en fonction de la vitesse de rotation de l'un des organes reliés par le dispositif.

   Application au contrôle des différentiels de véhicules automobiles.

FIG.1

EP 0 511 068 A1

La présente invention concerne les dispositifs de transmission pour véhicules automobiles et notamment de tels dispositifs comportant un accouplement à fluide visqueux désigné en général par le terme viscocoupleur.

Ces accouplements peuvent être du type comprenant deux éléments coaxiaux délimitant une enceinte étanche dans laquelle est reçu un fluide visqueux, chacun de ces éléments étant solidaire en rotation d'une série de disques, les disques des deux séries étant alternés et noyés au moins en partie dans le fluide visqueux. On sait que dans un tel accouplement, le couple résistant qui provoque l'entraînement de l'un des deux éléments par l'autre est fonction de la différence de vitesse entre ces deux éléments. Ces accouplements peuvent être utilisés, dans des véhicules, par exemple pour contrôler le glissement entre les deux arbres de sortie d'un différentiel, ou bien encore être incorporés à une transmission longitudinale, dans un véhicule à quatre roues motrices, auquel cas ils peuvent être désignés par le terme de viscotransmetteur.

Dans certaines situations de fonctionnement, la présence de tels accouplements peut présenter un inconvénient. Tel est notamment le cas lors d'une manoeuvre du véhicule à faible vitesse, par exemple lors d'une manoeuvre de parking, au cours de laquelle il serait préférable de ne pas fonctionner en quatre roues motrices.

Dans d'autres conditions de fonctionnement, au contraire, il serait souhaitable de rendre solidaires en rotation les deux organes entre lesquels est disposé le dispositif d'accouplement, au-dessus d'une vitesse de rotation déterminée de l'un d'entre eux.

Le but de cette invention est par conséquent de proposer un dispositif de transmission comprenant un mécanisme différentiel, dans lequel des moyens soient prévus pour contrôler de façon optimale la différence de vitesse entre deux des organes d'entrée et de sortie de ce différentiel.

A cet effet, l'invention a pour objet un dispositif de transmission pour véhicule, comprenant un mécanisme différentiel muni d'un organe d'entrée et de deux organes de sortie, et des moyens pour contrôler la différence de vitesse entre deux de ces organes d'entrée et de sortie, caractérisé en ce que lesdits moyens comprennent, d'une part, un dispositif d'accouplement à fluide visqueux comportant deux éléments rotatifs, respectivement menant et mené et, d'autre part, un embrayage à friction ainsi que des moyens intégrés pour commander le serrage et le desserrage de cet embrayage en fonction de la vitesse de rotation de l'un des deux organes d'entrée ou de sortie dont on contrôle la différence de vitesse.

Suivant d'autres caractéristiques :
- l'embrayage à friction est disposé en série avec le dispositif d'accouplement à fluide visqueux;
- l'embrayage à friction est disposé en parallèle avec le dispositif d'accouplement à fluide visqueux;
- le dispositif d'accouplement à fluide visqueux est du type comprenant un élément intérieur et un élément extérieur délimitant entre eux une enceinte étanche dans laquelle est reçu le fluide visqueux, chacun de ces éléments étant solidaire en rotation d'une série de disques, les disques des deux séries étant alternés et noyés au moins en partie dans le fluide visqueux;
- l'embrayage comprend au moins un plateau mobile axialement, pouvant être actionné par au moins un organe mobile radialement sous l'effet de la force centrifuge, à l'encontre de la force exercée par un ressort de rappel.

L'invention va être décrite plus en détails ci-dessous en se référant aux dessins annexés, donnés uniquement à titre d'exemples et sur lesquels :
- les Fig. 1 à 3 sont des vues partielles en coupe illustrant différents modes de réalisation de l'invention;
- la Fig. 4 est un diagramme illustrant le mode de fonctionnement du dispositif de la Fig. 3;
- les Fig. 5 et 6 sont deux schémas illustrant deux autres configurations possibles du dispositif selon l'invention.

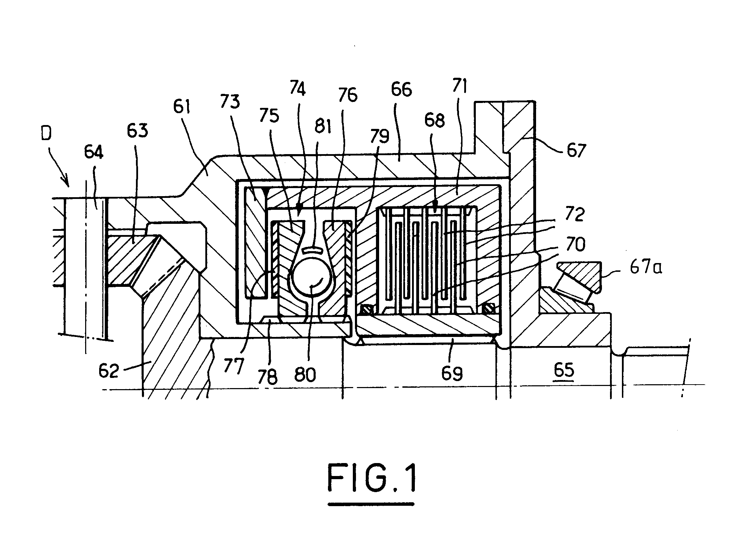

Dans le mode de réalisation de la Fig. 1, l'invention est appliquée à un différentiel D qui peut être un différentiel avant ou arrière dans un véhicule. En variante, le différentiel peut être un différentiel interponts.

Ce différentiel comprend un boîtier 61 constituant l'organe d'entrée, des planétaires dont un seul 62 est représenté au dessin et des satellites 63 portés par un axe porte-satellites 64.

Le planétaire 62 est solidaire d'un arbre de sortie 65 relié, par tout moyen convenable, à une roue motrice du véhicule. L'autre planétaire est solidaire en rotation d'un deuxième arbre de sortie, non représenté, relié à l'autre roue motrice.

Le boîtier du différentiel est prolongé latéralement pour délimiter un carter 66 fermé par un couvercle 67 supporté à rotation par un roulement 67a, sur la structure du véhicule.

A l'intérieur de l'enceinte délimitée par ce prolongement 66 du boîtier et par le couvercle 67 est disposé selon l'invention un ensemble comprenant un accouplement 68 à fluide visqueux dont l'élément intérieur est un manchon 69 solidaire en rotation de l'arbre 65 et portant une première série de disques 70 et dont l'élément extérieur est un boîtier 71 portant une deuxième série de disques 72.

Le boîtier 71 est prolongé latéralement en 73 pour constituer une partie d'un dispositif d'embrayage 74. Ce dernier comprend deux plateaux d'embrayage 75, 76 montés coulissants sur et solidaires en rotation d'un prolongement latéral 77 du boîtier 61 de différentiel. Ces deux plateaux portent des garnitures de friction 78, 79 et peuvent être écartés axialement au moyen de billes 80 qui sont soumises à la force centrifuge et peuvent se déplacer radialement vers l'extérieur à l'encontre d'un organe élastique de rappel 81.

Le fonctionnement d'un tel dispositif est le suivant : au-dessous d'une certaine vitesse de rotation du boîtier de différentiel 61, qui peut être de l'ordre de quelques centaines de tours, le dispositif d'accouplement à fluide visqueux 68 ne joue aucun rôle puisque l'embrayage 74 n'est pas serré.

Par contre, au-delà d'une telle vitesse de rotation du boîtier, l'embrayage 74 est actionné dans le sens du serrage, et le boîtier 61 du différentiel devient solidaire en rotation du boîtier 71 de l'accouplement à fluide visqueux. Ce,dernier joue alors son rôle et contrôle le glissement du différentiel.

En particulier, si au démarrage une roue patine, la vitesse de l'organe d'entrée augmente, ce qui provoque le serrage de l'embrayage et l'intervention du visco-coupleur pour freiner l'organe d'entrée par rapport à l'arbre 65.

Dans ce mode de réalisation, les dispositifs d'accouplement 68 et d'embrayage 74 montés en série, sont intégrés au différentiel.

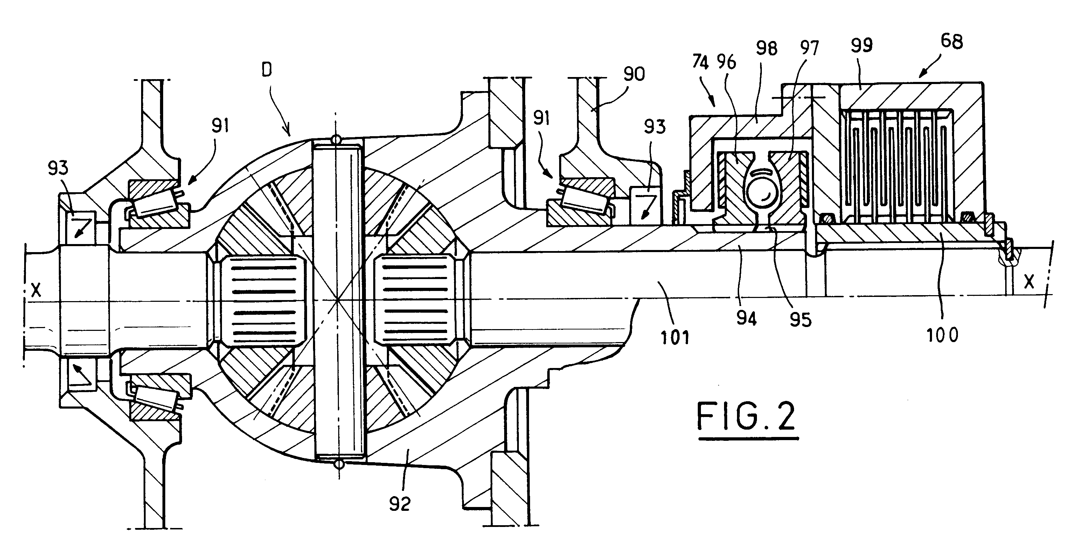

Dans le mode de réalisation de la Fig. 2, ces deux dispositifs 68, 74 sont disposés à l'extérieur d'un carter 90 et de roulements 91 supportant le boîtier de différentiel 92. A cet effet ce dernier est prolongé à l'extérieur du carter 90, du roulement adjacent 91 et d'une garniture d'étanchéité 93, par un tronçon d'arbre creux 94 dont l'extrémité cannelée 95 supporte les plateaux 96, 97 du dispositif d'embrayage 74. Ces plateaux sont disposés à l'intérieur d'un boîtier 98, lui-même solidaire du boîtier adjacent 99 de l'accouplement à fluide visqueux 68. L'élément interne 100 de cet accouplement à fluide visqueux est solidaire en rotation de l'arbre de sortie adjacent 101 du différentiel, qui s'étend à travers le prolongement creux 94 du boîtier 92.

Le fonctionnement de ce dispositif est analogue à celui décrit à propos de la Fig. 1, avec cette différence que les deux dispositifs d'embrayage et d'accouplement sont disposés à l'extérieur du carter du différentiel ce qui procure une accessibilité améliorée ainsi qu'une plus grande facilité d'adaptation.

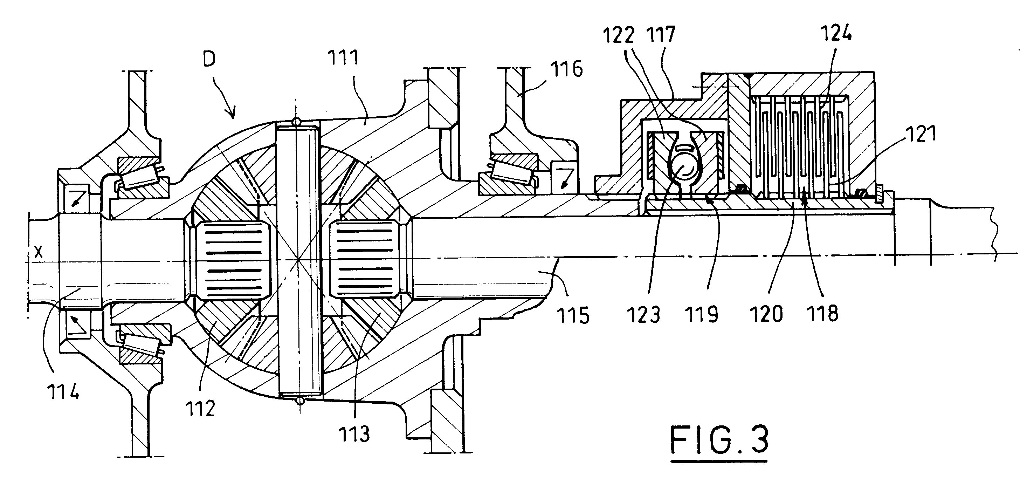

Alors que dans les deux premiers modes de réalisation, le visco-coupleur et l'embrayage sont disposés en série, dans le mode de réalisation de la Fig. 3, ils sont disposés en parallèle. On retrouve dans ce mode de réalisation un différentiel D comportant un boîtier 111 constituant l'organe d'entrée, et deux planétaires 112, 113 reliés à des arbres de sortie 114, 115. le boîtier 111 est prolongé à l'extérieur du carter 107 pour être relié à un boîtier 117 recevant, d'une part, le visco-coupleur 118 et, d'autre part, l'embrayage 119. Un manchon 120 est relié par des cannelures internes à l'arbre de sortie 115 et par des cannelures externes, d'une part à une série de disques 121 du visco-coupleur et, d'autre part, à deux plateaux d'embrayage 122 entre lesquels sont disposées des billes 123. L'autre série de disques 124 du viscocoupleur est solidaire en rotation du boîtier 117.

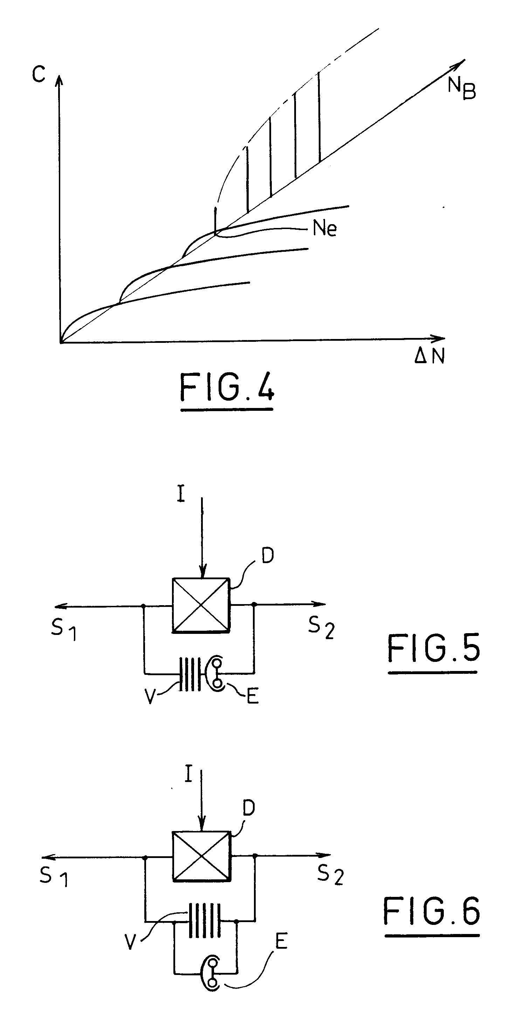

Dans une telle configuration, si l'on désigne par $N_A$ la vitesse de rotation du boîtier 111 et par $N_B$ la vitesse de rotation de l'arbre de sortie 115, tant que $N_B$ est inférieur à une valeur déterminée $N_e$, le visco-coupleur 118 intervient pour contrôler la vitesse différentielle $\Delta N$ entre $N_A$ et $N_B$. La loi de variation du couple résistant C en fonction de la différence de vitesse entre l'organe d'entrée du différentiel et l'organe de sortie est représentée sur la Fig. 4 par une série de courbes dont le point origine se déplace le long de la droite représentant la variation de la vitesse $N_B$ de l'arbre de sortie. Ces courbes correspondent à la loi de fonctionnement du viscocoupleur $C = f(\Delta N)$.

Dès que $N_B$ devient supérieur ou égal à $N_e$, l'embrayage se serre de sorte que $\Delta N$ devient nul. La loi de transmission du couple devient alors une loi d'embrayage $C = f(N)$, cette loi étant représentée sur la Fig. 4 par une série de segments parallèles à l'axe des ordonnées et ayant pour origine des points de la droite représentant la variation de la vitesse $N_B$ de l'arbre de sortie.

On a représenté de façon très schématique aux Fig. 5 et 6 deux autres configurations possibles mettant en oeuvre l'invention.

Dans le cas de la Fig. 5, un différentiel D comportant un organe d'entrée I et deux organes de sortie S1, S2 est associé à un visco-coupleur V et à un embrayage E disposés en série entre les deux organes de sortie S1, S2.

Dans le mode de réalisation de la Fig. 6, le visco-coupleur V et l'embrayage E sont disposés en parallèle, toujours entre les deux organes de sortie S1, S2.

On notera par ailleurs qu'une fonction supplémentaire peut être ajoutée à un dispositif suivant l'invention : le plateau d'embrayage le plus proche du dispositif d'accouplement à fluide visqueux peut être agencé de façon à modifier la caractéristique de fonctionnement de cet accouplement en fonction de la vitesse de rotation de l'arbre portant les plateaux d'embrayage. A cet effet, la paroi du boîtier qui sépare l'embrayage de l'accouplement comporte au moins un perçage dans lequel est reçue une navette en appui sur le plateau d'embrayage. De la sorte, lorsque les billes sont déplacées radialement vers l'extérieur sous l'effet de la force centrifuge, dans un premier temps les plateaux d'embrayage s'écartent, ce qui a pour effet de repousser la ou chaque navette et de modifier le volume de l'enceinte de l'accouplement et par conséquent sa pression interne. Cela a pour effet de modifier la caractréristique $C = f(\Delta N)$, où C est le couple résistant et $\Delta N$ la différence de vitesse de rotation entre les deux éléments de l'accouplement.

Un résultat analogue peut être obtenu en faisant agir le plateau d'embrayage sur un plateau mobile disposé à l'intérieur de l'accouplement et ayant pour effet de modifier l'écartement entre les disques.

Enfin, deux dispositifs selon l'invention, comprenant un accouplement à fluide visqueux et un embrayage, peuvent être combinés pour remplacer un différentiel classique. Il suffit dans ce cas de prévoir un organe d'entrée commun aux deux accouplements à fluide visqueux, et de relier par tout moyen approprié les deux organes de sortie aux deux roues motrices du véhicule.

**Revendications**

1. Dispositif de transmission pour véhicule, comprenant un mécanisme différentiel (D) muni d'un organe d'entrée (61 ; 92 ; 111 ; I) et de deux organes de sortie (65 ; 101 ; 115 ; S1, S2), et des moyens pour contrôler la différence de vitesse entre deux de ces organes d'entrée et de sortie, caractérisé en ce que lesdits moyens comprennent, d'une part, un dispositif d'accouplement à fluide visqueux (68 ; 118 ; V), comportant deux éléments rotatifs, respectivement menant et mené, et, d'autre part, un embrayage à friction (74 ; 119 ; E) ainsi que des moyens intégrés (80 ; 123) pour commander le serrage et le desserrage de cet embrayage en fonction de la vitesse de rotation de l'un des deux organes d'entrée ou de sortie dont on contrôle la différence de vitesse.

2. Dispositif de transmission suivant la revendication 1, caractérisé en ce que l'embrayage à friction (74) est disposé en série avec le dispositif d'accouplement à fluide visqueux (68).

3. Dispositif de transmission suivant la revendication 1, caractérisé en ce que l'embrayage à friction (119) est disposé en parallèle avec le dispositif d'accouplement à fluide visqueux (118).

4. Dispositif de transmission suivant la revendication 1, caractérisé en ce que l'embrayage (74) est actionné en fonction de la vitesse de l'organe d'entrée du différentiel.

5. Dispositif de transmission suivant la revendication 1, caractérisé en ce que l'embrayage (119) est actionné en fonction de la vitesse de l'un des organes de sortie du différentiel.

6. Dispositif de transmission suivant la revendication 1, caractérisé en ce que le dispositif d'accouplement à fluide visqueux est du type comprenant un élément intérieur (69 ; 100 ; 120) et un élément extérieur (71 ; 99 ; 117) délimitant entre eux une enceinte étanche dans laquelle est reçu le fluide visqueux, chacun de ces éléments étant solidaire en rotation d'une série de disques, les disques des deux séries étant alternés et noyés au moins en partie dans le fluide visqueux.

7. Dispositif suivant la revendication 1, caractérisé en ce que l'embrayage comprend au moins un plateau (75, 76) mobile axialement, pouvant être actionné par au moins un organe (80) mobile radialement sous l'effet de la force centrifuge, à l'encontre de la force exercée par un ressort de rappel (81).

8. Dispositif suivant les revendications 6 et 7, caractérisé en ce qu'il est prévu des moyens actionnés en même temps que l'embrayage, pour faire varier la caractéristique de fonctionnement du dispositif d'accouplement à fluide visqueux, par modification de la pression dans l'enceinte, modification de l'écartement entre les disques ou autre.

9. Dispositif suivant la revendication 1, caractérisé en ce que l'ensemble formé de l'accouplement et de l'embrayage est interposé entre le boîtier (61 ; 92 ; 111) et l'un des arbres de sortie (65 ; 101 ; 115) du différentiel.

10. Dispositif de transmission suivant la revendication 9, caractérisé en ce que ledit arbre de sortie (65 ; 101) est solidaire en rotation de l'élément intérieur du dispositif d'accouplement et l'embrayage est interposé entre le boîtier (61 ; 92) du différentiel et ledit élément extérieur (71 ; 99) du dispositif d'accouplement, ledit embrayage étant commandé en fonction de la vitesse de rotation dudit boîtier (61 ; 92).

11. Dispositif de transmission suivant la revendication 10, caractérisé en ce que l'ensemble comprenant l'accouplement à fluide visqueux et l'embrayage est disposé à l'intérieur du boîtier (61 ; 67) du différentiel.

12. Dispositif de transmission suivant la revendication 10, caractérisé en ce que l'ensemble comprenant l'accouplement à fluide visqueux et l'embrayage est disposé à l'extérieur du carter (90 ; 116) contenant le différentiel.

13. Dispositif de transmission suivant la revendication 9, caractérisé en ce que ledit arbre de sortie (115) est solidaire en rotation de l'élément intérieur (120) du dispositif d'accouplement et des disques d'embrayage (122), l'élément extérieur (117) du dispositif d'accouplement étant solidaire en rotation du boîtier (111) du différentiel.

14. Dispositif de transmission suivant la revendication 1, caractérisé en ce que l'ensemble formé de l'accouplement (V) et de l'embrayage (E), disposés en série, est interposé entre les deux organes de sortie (S1, S2) du différentiel.

15. Dispositif de transmission suivant la revendication 1, caractérisé en ce que l'ensemble formé du dispositif d'accouplement (V) et de l'embrayage (E), disposés en parallèles, est interposé entre les deux organes de sortie (S1, S2) du différentiel.

FIG.1

FIG.2

FIG.3

EP 0 511 068 A1

FIG.4

FIG.5

FIG.6

EP 0 511 068 A1

Office européen
des brevets

**RAPPORT DE RECHERCHE EUROPEENNE**

Numero de la demande

EP    92 40 1100
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 203 570 (TOCHIGI-FUJI) <br> * le document en entier * <br> --- | 1,2,4,6, 9-11 | F16D35/00 <br> F16H1/455 <br> B60K17/35 |
| Y | DE-C-3 431 717 (UNI-CARDAN) <br> * le document en entier * <br> --- | 1,2,4,6, 9-11 | |
| Y | DE-C-3 830 199 (VISCODRIVE) <br> * le document en entier * <br> --- | 1,2,5-9, 13 | |
| Y | US-A-4 874 058 (KWOKA) | 1,2,5-9, 13 | |
| A | * le document en entier * <br> --- | 11 | |
| Y | GB-A-2 192 257 (HONDA) <br> * le document en entier * <br> --- | 1,3,4,6, 9,15 | |
| Y | FR-A-2 317 558 (GKN) | 1,3,4,6, 9,15 | **DOMAINES TECHNIQUES RECHERCHES (Int. Cl.5)** |
| A | * page 6, ligne 12 - page 15, ligne 10; figures 2,5 * <br> --- | 12,13 | F16D <br> F16H <br> B60K |
| A | GB-A-2 212 230 (VISCODRIVE) <br> * le document en entier * <br> --- | 9-11 | |
| A | EP-A-0 314 420 (TOYOTA) <br> * page 4, ligne 55 - page 6, ligne 20; figures 5-9 * <br> --- | 8,9,11 | |
| A | GB-A-2 235 502 (HONDA) <br> * le document en entier * <br> --- | 12 | |
| A | US-A-4 031 780 (DOLAN) <br> * le document en entier * <br> --- | 13,15 | |
| | -/-- | | |

Le présent rapport a été établi pour toutes les revendications

| Lieu de la recherche | Date d'achèvement de la recherche | Examinateur |
|---|---|---|
| LA HAYE | 30 JUILLET 1992 | BALDWIN D.R. |

10

**Office européen**
**des brevets**

# RAPPORT DE RECHERCHE EUROPEENNE

Numero de la demande

EP    92 40 1100
Page  2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|-------------------------------------------------------------------------------|------------------------|--------------------------------------|
| A | FR-A-2 168 763 (GKN)<br>* le document en entier * | 14,15 | |
| | ----- | | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|----------------------|-----------------------------------|-------------|
| LA HAYE | 30 JUILLET 1992 | BALDWIN D. R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)